# NEUE EUROPÄISCHE PATENTSCHRIFT

(11) **EP 0 569 849 B2**
(45) Veröffentlichungstag und Bekanntmachung des Hinweises auf die Entscheidung über den Einspruch: **28.06.2006**
(45) Hinweis auf die Patenterteilung: 27.11.1996
(21) Anmeldenummer: 93107333.2
(22) Anmeldetag: 06.05.1993
(51) Int. Cl.: D03D 15/00, D03D 11/00, B60J 7/12

(54) **Textiles Anti-Vandalismus Flächengebilde**
Anti-vandalism fabric
Tissu anti-vandalisme

(30) Priorität: 13.05.1992 DE 4215662
(43) Veröffentlichungstag der Anmeldung: 18.11.1993
(73) Patentinhaber: Akzo Nobel N.V., 6824 BM Arnhem (NL)
(72) Erfinder: Schuster, Dieter, Dr., W-5600 Wuppertal 23 (DE); Fels, Achim, Dr., W-5600 Wuppertal 1 (DE)
(74) Vertreter: Fett, Günter

(56) Entgegenhaltungen:
- EP-A- 0 013 432
- EP-A- 0 202 183
- EP-A- 0 377 813
- EP-A- 0 441 719
- FR-A- 2 390 117
- JP-A- 61 275 440
- US-A- 2 765 192
- US-A- 4 297 607

## Beschreibung

### Beschreibung

Die vorliegende Erfindung betrifft ein textiles Anti-Vandalismus Flächerigebilde, das einen Raum zumindest teilweise umgibt und aus mindestens drei Lagen besteht, wobei mindestens eine der Lagen Aramid-Garne enthält.

EP-A-0 250 826 offenbart eine schnittfeste Umhüllung für weniger widerstandsfähige Gebilde, wie beispielsweise Taue, Gurtbänder oder Riemen. Diese Umhüllung besteht aus einem textilen Flächengebilde, welches aus Kom-Mantel-Fäden aufgebaut ist. Die Kem-Mantel-Fäden enthalten als Kern Garne mit hoher Zugfestigkeit, die beispielsweise aus Aramid, Kohlenstoff, Metall, Glas, Polyolefinen mit sehr hohem Molekulargewicht oder Kombinationen aus diesen bestehen. Die Kerngarne sind mit dem Mantelfaden umwickelt, der ebenfalls eine hohe Zugfestigkeit aufweisen sollte und aus dem gleichen oder einem anderen Material besteht wie die Kerngarne. Die umwickelten Kerngarne werden zur Herstellung der Umhüllung geflochten, gewirkt oder gewebt.

Gemäß dieser Schrift wird die beste Ausführungsform mit einem Gam aus Polyethylanfäden mit sehr hohem Molekulargewicht als Ausgangsmaterial für das Tau, den Riemen oder das Gurtband erreicht. Für die Umhüllung wird ein Kern-Mantel-Faden verwendet, dessen Kern aus Edelstahldrähten und einem Gam aus Polyethylenfäden mit hoher Zugfestigkeit besteht, und dessen Mantel aus Polyethylenfäden mit niedrigerer Zugfestigkeit besteht, die um den Kern gewickelt sind. Auf diesen Mantel wird ein zweiter Mantel aus Polyesterfäden aufgebracht.

Nachtellig an dieser bekannten Umhüllung zum Schutz von weniger widerstandsfähigen Gebilden ist, daß die Herstellung von Kem-Mantel-Fäden sehr aufwendig ist. Insbesondere da auch die einzelnen Kerngarne und Matttelfäden noch aus unterschiedlichen Materialien bestehen sollen, Zur Erhöhung der Schnittfestigkeil wird der Einsatz von Edelstahldrähten empfohlen, wodurch zusätzlich die Kosten erhöht werden.

EP-A-0 377 813 offenbart einen Verdeckstoff für Fahrzeuge mit einem obergewebe, einem Untarstoff und einer zwischen diesen angeordneten Gummierung, wobei diese zweischichtig ausgeführt ist und zwischen den Gummierungsschichten eine Zwischenlage aus hochfestem Material, beispielsweise ein Gittergewebe aus Ararnfdfäden, eingebettet ist. Aufgrund der Einbettung in Gummierungen ist die Zwischenlage sowohl mit dem Obergewebe als auch mit dem Unterstoff vollfiächig verbunden. Durch diese Maßnahme erhält der Verdeckstoff gegenüber Verdeckstoffen ohne hochfeste Zwischoniage eine höhere Festigkeit bei geringerer Dehnfähigkeit, und es ist schwieriger diesen mit einem Messer aufzuschlitzen. Es hat sich aber gezeigt, daß auch derartige Vordeckstoffe nicht Ober eine Schnittfestigkeit verfügen, um einen sicheren Schutz gegenüber Vandalismus zu bieten.

Der Erfindung liegt daher die Aufgabe zugrunde, ein textiles Flächengebilde, das einen Raumn zumindest teilweise umgibt und aus mindestens drei Lagen besteht, wobei mindestens eine der Lagen Aramid-Garne enthält, und die Lage(n) aus Aramid-Garnen als Zwischenlage (n) zwishen den weiteren Lagen als Außenlagen des Flächangebildes angeordnet ist (sind) zur Verfügung zu stellen, das unter Vermeidung der oben genannten Nachteile, bei Vandallsmus zumindest die Einbruchsicherheit verbessert.

Diese Aufgabe wird bei dem genannten textilen Flächengebilde erfindungsgemäß dadurch geiöst, daß die Lagen lediglich abschnittsweise miteinander verbunden sind und zumindest eine der Lagen aus Aramid-Garnen punkt- oder linienförmig mit mindestens einer der Außenlagen verbunden ist, wobei die punkt- oder linienförmigen verbindungen in einem Abstand von 20 bis 100 cm angeordnet sind und die Garne der Aramid-Garne enthaltenden Lage(n) mit geringer Kraft zusammenschiebbar sind, so daß bei einer parallel zu der (den) Lage(n) und in der Fläche dieser Lage(n) wirkenden Kraft von etwa 100 N mindestens drei Garne zusammengeschoben sind.

Das erfindungegemäße textile Flächengsbilde eignet sich in vorteilhafter Weise für Verdecke von Cabrio-Fahrzeugen, LKW-Planen und Container-Abdeckungen, also für äußere Abdeckungen, die im Falle einer Einbruchabsicht bei Verwendung der bisher bekannten textilen Flächengebilde Innerhalb sehr kurzer Zeit mit einem Messer aufgeschlitzt werden können. Ebenfalls ist eine Verwendung für Zeite, sowohl im Freizeitbereich als auch beispielsweise für Tragluftzelte, oder für Textilkotter möglich, um deren Schnittfestigkelt zu erhöhen. Die zu verwendenden Aramid-Garne eignen sich für das erfindungsgemäße Flächengebilde gegenüber heute bekannten Gammaterialien insbesondere deswegen, weil diese eine besonders günstige Kombination von Schnittfestlgkelt und thermischer Beständigkeit aufweisen. Die Garne sollen also nicht nur schnittfest sein, sondem auch, beispielsweise bei Sonneneinstrahlung über längere Zeit, nicht erwelchen.

Cabrio-Verdecke bestehen üblicherweise aus zwei Lagen: dem dünnen Stoff- oder Kunstatoffolien-Dachhimmel und der Stoff- oder Kunstleder-Außanschicht Zusätzlich kann zwischen diesen beiden Lagen eine Vliesschicht zur Wärmeisolation angeordnet sein.

Diese Aufbauten haben neben leichter Brennbarkeit und geringer Widerstandsfähigkeit gegenüber mechanischen Belastungen (beispielsweise bei Unfällen) den Nachteil einer sehr geringen Schnittfestigkeit, so daß diese ohne große Kraftaufwendung aufgeschnitten werden können. Diese Verdecke bleten somit praktisch keinen Schutz gegenüber Vandalismus, insbesondere Einbruch. Auch herkömmliche Flächengebilde zur Herstellung von LKW-Planen, Container-Abdeckungen. Zeiten und Textilkotiern aus PVC beschichteten Geweben, bzw wasserabweisend ausgerüsteten Nylon-oder Baumwollgeweben weisen derartige Nachteile auf.

Bei üblicherweise aus zwei Lagen bestehenden Cabrio-Verdecken wird die Lage, die Aramid-Garne enthält, in vorteilhafter Ausgestaltung der Erfindung als zusätzliche Zwischenlage zwischen den beiden Außenlagen des Flächengebildes angeordnet. Bei Verdecken, die zusätzlich eine Vliesschicht zur Wärmeisolation aufweisen, wird anstelle das herkömmllchen Vlieses eine Kombination aus einer Lage, die Aramid-Garne enthält, und einem Aramid-Filz als Zwischenlage eingesetzt. Anstatt einer können auch mehrere Lagen, die Aramid-Garne enthalten, als Zwischenlegen angeordnet werden. Neben der höheren Schnittfestigkeit wird durch diese Maßnahmen eine bessere thermische Isolierung erzielt.

Zur Erhöhung der Einbruchsicherheit in den Laderaum von LKW's oder Containern und Zeiten wird die Aramid-Garne enthaltende Lage als Innere Lage unter der herkömmlichen Außenlage angeordnet. Bei Zelten für den Freizeitbereich kann es darüber hinaus zweckmäßig sein, die Lage, die Aramid-Garne enthält, zum Innenraum des Zeltes mit einer Stoffschicht zu verkleiden, um den Innenraum optisch ansprechender zu gestalten, so daß die die Sehnittfestigkeit erhöhende Lage auch hier als Zwiseanlage zwischen zwei Außenlagen angeordnet werden kann.

Erfindungswesentlich ist, daß die Garne in wenigstens einer der Lagen aus Aramid-Garnen mit geringer Kraft zusammenschiebbar sind. Für diese Lage wird bevorzugt ein Gewebe oder eine Maschenware eingesetzt. Das Gewebe oder die Maschenware verhindern zwar nicht den Einstich mit einem Messer in das textile Flächengebilde, bewirken aber, daß das Messer selbst unter größter menschlicher Kraftaufwendung nicht durch das Flächengebilde gezogen werden kann, um einen derart großen Einschnitt zu produzieren, daß ein Eingriff in den zu schützenden Raum möglich wäre. Der in dem textilen Flächengebilde nach erfolgloser Einbruchabsicht entstandene Einstich kann auf relativ einfache Weise, beispielsweise durch einen Klebestreiten repariert werden, ohne daß der Austausch der kompletten Raumabdeckung erforderlich wird, um zumindest einen Wetterschutz für den zu schützenden Raum sicherzustellen. Darüber hinaus besteht die Möglichkeit, die Außenlagen des textilen Flächengebildes aus elastischem Material zu fertigen, das nach dem Herauszlehen des Messers in die Ausgangsposition zurückkehrt und dessen Schnittränder kaum sichtbar wieder miteinander verklebt werden können.

Ein herkömmliches Cabrlo-Verdeck hat eine Schnittfestigkeit von etwa 150 N. Durch die erfindungsgemäße Anordnung mindestens einer Lage, die Aramid-Garne enthält, die mit geringer Kraft zusammenschiebbar sind, erfolgt nach dem Einstich ein Fadenstau vor der Messerschneide, d.h. eine sehr schneit zunehmende Ansammlung von Fäden, die immer schwieriger zu durchschneiden ist. Es wird daher eine Lage aus Aramid-Garnen eingesetzt, bei der durch eine parallel zu und in der Lage wirkenden Kraft von 100 N mindestens drei, vorzugsweise mindestens fünf, Garne vor der Messerschneide zusammengeschoben werden, ohne daß die Garne durchschnitten werden. Versuche haben gezeigt, daß bei Anordnung einer diese Eigenschaft aufweisenden Lage, ein Cabrlo-Verdeck selbst von einer sehr kräftigen Person nicht durchschnitten werden kann. Eine solche Person kann erfahrungsgemäß eine Kraft von bis zu 600 N mit einem Messer aufbringen.

Um die leichte Verschiebbarkeit der Garne in der Lage zu erreichen, ist eine sogenannte "offene" Einstellung des Gewebes oder der Maschenware zu bevorzugen. Darunter Ist ein Gewebe oder eine Maschenware mit geringer Fadenzahl pro cm² zu verstehen. Als besonders vorteilhaft hat sich beispielsweise ein Gewebe mit Panama 4/4 Bindung mit einem Flächengewicht von 638 g/m², einem Titer von 3360 dtex und 9,6/8,8 Fd/cm in Kett- bzw. Schußrichtung erwlesen.

Neben der Offenhelt des Gewebes hat die Art der Verbindung der die Aramid-Garne enthaltenden Lage mit der oder den weiteren Lagen einen hohen Einfluß auf die Schmittfastigkeit. Bei flächigem Verbund, beispielsweise In Form eines Laminats oder eines Sandwichs des Aramid-Gewebes mit den Außenschichten, findet keine Fadenanhäufung vor dem Messer statt, da ein Zusammenschieben der Garne aufgrund der großflächigen Verbindung mit der oder den Außenlagen unterbunden wird. Erfindungsgemäß werden daher die Lagen des Flächengeblides nur abschnittsweise miteinander verbunden. Diese Verbindung kann punkt- oder linienförmig erfolgen, beispielsweise durch Nähen, Kleben, Nieten oder ähnlichem. Neben parallel verlaufenden Nähten oder nahtähnlichen Vetklebungen oder Nietenreihen, kommt hierfür auch eine Caro-Steppung in Betracht. Um die Verschiebbarkeit der Fäden In dem Aramid-Gewebe sicherzustellen, ist hierbei der Nahtabstand oder Klebestellenabstend nicht zu eng zu wählen, da dieses wiederum zu einer unerwünschten Garnfixierung führen würde. Der Abstand zwischen, den punkt- oder linienförmigen Verbindungen beträgt daher 20 bis 100 cm, vorzugeweise 40 bis 60 cm. Ein Abstand von 50 cm hat sich bestens bewährt Bei Einhaltung dieser Parameter Ist ein Zerschneiden, beispielsweise eines Cabrio-Vordecks, selbst unter einer Kraftaufwendung von 600 N nicht mehr möglich.

Im folgenden wird die Erfindung anhand von Beispielen weiter erläutert, In Versuchsreihen wurden zwei Aramid-Gewebe untersucht:
Gewebe A wies ein Flächengswicht von 63B g/m², einen Titer von 3360 dtex und 9,6/8,8 Fd/cm in Kett- bzw. Schußrichtung mit Panama 4/4 Bindung auf.
Gewebe B wies ein Flächengewicht von 290 g/m², einen Titer von 1260 dtex und 11,0/10,5 Fd/cm in Kett- bzw. Schußrichtung mit Leinwend 1/1 Bindung auf.

In einer ersten Versuchsreihe wurden diese Gewebe jeweils als Zwischenlage zwischen den beiden Lagen eines herkömmlichen Cabrio-Verdeckes angeordnet. Die jeweiligen Flächengebilde wurden in einen 5 cm breiten Rahmen eingespannt. Die Flächengebilde wurden mit einem Messer zerschnitten, das in der Mitte und parallel zur seitlichen Begrenzung des Rahmens geführt wurde, und die zum Zerschneiden erforderliche Kraft wurde bestimmt. Für das das Gewebe A enthaltende Flächengebilde betrug diese Kraft 400 N und für das Flächengebilde mit Gewebe B 390 N.

Die Fadenzahl pro cm² stimmte bei den beiden Geweben annähernd überein. Trotz des wesentlich geringeren Flächengewichts des Gewebes B resultierte für die beiden Flächengebilde in etwa die gleiche Schnittfestigkeit, die allerdings nicht ausreichend ist, um einen sicheren Schutz gegenüber Vandalismus zu bieten.

In einer zweiten Versuchsreihe wurden die die Gewebe A und B als Zwischenlage aufweisenden Flächengebilde in einen 50 cm breiten Rahmen eingespannt. Während das das Gewebe B aufweisende Flächengebilde mit einer Kraft von 430 N durchschnitten werden konnte, konnte das Flächengebilde mit dem Gewebe A selbst unter Kraftaufwendung von 600 N nicht durchschnitten werden.

Das Flächengebilde mit dem Aramid-Gewebe A zeigte in diesen Versuchsreihen somit eine große Steigerung der zum Durchschneiden erforderlichen Kraft von 400 N auf eine Kraft größer als 600 N bei einer Erhöhung des Abstandes der die Lagen miteinander verbindenden Mittel (Rahmen). Das Flächengebilde mit dem Aramid-Gewebe B zeigte lediglich eine Erhöhung der zum Durchschneiden erforderlichen Kraft von 390 N auf 430 N. Die Ursache hierfür liegt in der Bindungsart der verwendeten Aramid-Gewebe. Aufgrund der Leinwand-Bindung liegt bei dem Gewebe B eine geringere Verschiebbarkeit der Garne in dem Gewebe vor, so daß, gegenüber der lockeren Panama-Bindung des Gewebes A, die abschnittsweise Verbindung der Aramid-Garne enthaltenden Lage mit den Außenlagen nahezu keinen Einfluß auf die Schnittfestigkeit des Flächengebildes hat.

## Patentansprüche

1. Textiles Anti-Vandalismus Flächengebilde, das einen Raum zumindest teilweise umgibt und aus mindestens drei Lagen besteht, wobei mindestens eine der Lagen Aramid-Garne enthält und die Lage(n) aus Aramid-Garnen als Zwischenlage(n) zwischen den weiteren Lagen als Außenlagen des Flächengebildes angeordnet ist (sind), **dadurch gekennzeichnet, daß** die Lagen lediglich abschnittsweise miteinander verbunden sind und zumindest eine der Lagen aus Aramid-Garnen punkt- oder linienförmig mit mindestens einer der Außenlagen verbunden ist, wobei die punkt- oder linienförmigen Verbindungen in einem Abstand von 20 bis 100 cm angeordnet sind, und daß die Garne der Aramid-Garne enthaltenden Lage(n) mit geringer Kraft zusammenschiebbar sind, so daß bei einer parallel zu der (den) Lage(n) und in der Fläche dieser Lage(n) wirkenden Kraft von etwa 100 N mindestens drei Garne zusammengeschoben sind.

2. Textiles Flächengebilde nach Anspruch 1, **dadurch gekennzeichnet, daß** mindestens fünf Garne zusammengeschoben sind.

3. Textiles Flächengebilde nach Anspruch 1 oder 2, **dadurch gekennzeichnet, daß** die Lage aus Aramid-Garnen ein Gewebe ist.

4. Textiles Flächengebilde nach Anspruch 3, **dadurch gekennzeichnet, daß** die Lage aus Aramid-Garnen ein Gewebe mit Panama-Bindung ist.

5. Textiles Flächengebilde nach Anspruch 1 oder 2, **dadurch gekennzeichnet, daß** die Lage aus Aramid-Garnen eine Maschenware ist.

6. Textiles Flächengebilde nach Anspruch 1, **dadurch gekennzeichnet, daß** die Lage aus Aramid-Garnen mit mindestens einer der Außenlagen durch Nähen, Kleben oder ähnlichem verbunden ist.

7. Textiles Flächengebilde nach Anspruch 1 oder 6, **dadurch gekennzeichnet, daß** die punkt- oder linienförmigen Verbindungen in einem Abstand von 40 bis 60 cm angeordnet sind.

## Claims

1. An anti-vandalism textile sheet material which surrounds a space at least partially and consists of at least three layers, at least one of the layers containing aramide yarns, and the layer(s) consisting of aramide yarns being arranged as intermediate layer(s) between the other layers as outer layers of the sheet material, **characterised in that** the layers are connected to one another only in sections and at least one of the layers consisting of aramide yarns is connected to at least one of the outer layers in punctiform or linear manner, the punctiform or linear connections being arranged with a spacing from 20 cm to 100 cm, and **in that** the yarns of the layer(s) containing aramide yarns are capable of being pushed together with little force, so that with a force of about 100 N acting parallel to the layer(s) and in the plane of said layer(s) at least three yarns are pushed together.

2. Textile sheet material according to Claim 1, **characterised in that** at least five yarns are pushed together.

3. Textile sheet material according to Claim 1 or 2, **characterised in that** the layer consisting of aramide yarns is a woven fabric.

4. Textile sheet material according to Claim 3, **characterised in that** the layer consisting of aramide yarns is a woven fabric with panama weave.

5. Textile sheet material according to Claim 1 or 2, **characterised in that** the layer consisting of aramide yarns is a knitted fabric.

6. Textile sheet material according to Claim 1, **characterised in that** the layer consisting of aramide yarns is connected to at least one of the outer layers by sewing, adhesive bonding or the like.

7. Textile sheet material according to Claim 1 or 6, **characterised in that** the punctiform or linear connections are arranged with a spacing of 40 cm to 60 cm.

## Revendications

1. Produit textile plat anti-vandalisme entourant au moins partiellement un volume et composé d'au moins trois plis, l'un des plis au moins contenant des fils d'aramide, le (les) pli(s) de fils d'aramide étant disposé(s) entre les autres plis qui forment les plis extérieurs du produit textile plat, **caractérisé par le fait que** les plis sont liés les uns aux autres seulement par endroits et au moins un des plis de fils d'aramide est lié par des points ou par des lignes à au moins un des plis extérieurs, les liaisons par points ou par lignes étant espacées de 20 à 100 cm, et **par le fait que** les fils du (des) pli(s) contenant les fils d'aramide peuvent être repoussés les uns contre les autres par une faible force, de sorte qu'en présence d'une force d'environ 100 N agissant parallèlement au (aux) pli(s) et dans le plan dudit (desdits) pli(s), au moins trois fils sont poussés l'un contre l'autre.

2. Produit textile plat selon la revendication 1, **caractérisé par le fait qu'**au moins cinq fils sont repoussés l'un contre l'autre.

3. Produit textile plat selon la revendication 1 ou 2, **caractérisé par le fait que** le pli de fils d'aramide est un tissu.

4. Produit textile plat selon la revendication 3, **caractérisé par le fait que** le pli de fils d'aramide est un tissu à armure panama.

5. Produit textile plat selon la revendication 1 ou 2, **caractérisé par le fait que** le pli de fils d'aramide est un tissu à mailles.

6. Produit textile plat selon la revendication 1, **caractérisé par le fait que** le pli de fils d'aramide est lié à au moins un des plis extérieurs par couture, par collage ou par des moyens similaires.

7. Produit textile plat selon la revendication 1 ou 6, **caractérisé par le fait que** les liaisons par points ou par lignes étant espacées de 40 à 60 cm.
